# EUROPÄISCHE PATENTSCHRIFT

(11) **EP 2 331 598 B1**
(45) Veröffentlichungstag und Bekanntmachung des Hinweises auf die Patenterteilung: **06.07.2016**
(21) Anmeldenummer: 09783093.9
(22) Anmeldetag: 16.09.2009
(51) Int. Cl.: C08G 18/42, C08G 18/66

(54) **POLYURETHANE BASIEREND AUF POLYESTERDIOLEN MIT VERBESSERTEM KRISTALLISATIONSVERHALTEN**
POLYURETHANES BASED ON POLYESTER DIOLS WITH IMPROVED CRYSTALLIZATION BEHAVIOR
POLYURÉTHANES À BASE DE POLYESTERDIOLS PRÉSENTANT DES CARACTÉRISTIQUES DE CRISTALLISATION AMÉLIORÉES

(30) Priorität: 18.09.2008 EP 08164554
(43) Veröffentlichungstag der Anmeldung: 15.06.2011
(73) Patentinhaber: BASF SE, 67056 Ludwigshafen am Rhein (DE)
(72) Erfinder: DUWENHORST, Jörn, 49448 Lemförde (DE); PRISSOK, Frank, 49448 Lemförde (DE); GEHRINGER, Lionel, F-67630 Scheibenhard (FR)
(74) Vertreter: BASF IP Association
(86) Internationale Anmeldenummer: PCT/EP2009/062019
(87) Internationale Veröffentlichungsnummer: WO 2010/031792

(56) Entgegenhaltungen:
- EP-A- 0 397 121
- EP-A- 1 932 863
- US-A- 4 639 471
- DATABASE WPI Week 198611 Thomson Scientific, London, GB; AN 1986-071968 XP002558131 & JP 61 021123 A (KURARAY CO LTD) 29. Januar 1986 (1986-01-29)

## Beschreibung

Die Erfindung betrifft neue Polyurethane, insbesondere thermoplastische Polyurethane, sowie ihre Verwendung. Polyurethane sowie thermoplastische Polyurethane sind bereits seit langem bekannt und haben ein vielfältiges Anwendungsfeld gefunden. So werden Polyurethane beispielsweise in der Schuh- und Automobilindustrie, für Folien, Kabelummantelungen oder in Freizeitartikeln eingesetzt, sowie in vielfältiger Weise auch als Blendkomponente.

Marktseitig werden zunehmend Polyurethanprodukte mit teilweiser oder vollständiger Substitution der petrochemischen Rohstoffe durch solche aus nachwachsenden Quellen nachgefragt. Sebazinsäure ist ein nachwachsender Rohstoff, der zum Beispiel aus Pflanzenöl (Rizinusöl) erhalten wird. Allerdings zeigen Sebazinsäureester eine für viele Anwendungen unerwünschte Kristallisation, so dass sie für viele Anwendungen nicht in Frage kommen. So ist aus US-A-5 695884 die Verwendung von Polyesterpolyolen auf Basis von Sebazinsäure für thermoplastische Polyurethane mit hoher Kristallinität bekannt. Auch US 2006/0141883 A1 und US 2006/0121812 beschreiben die Verwendung von Polyesterpolyolen auf Basis von Sebazinsäure für Polyurethane für Fasern mit einem hohen Schmelzpunkt. In der WO 00/51660 A1 werden Polyurethane für Herzkatheder beschrieben, bei denen Polyesterpolyole auf Basis von Sebazinsäure eingesetzt werden können; auch hierbei ist eine ausreichende Härte erforderlich. Aus US 2007/0161731 A1 und US 6395833 B1 ist weiterhin bekannt, für die Herstellung von Polyesterpolyolen zur Anwendung in der Polyurethanchemie Sebazinsäure einzusetzen.

Aufgabe der vorliegenden Erfindung war es daher, Polyesterdiole mit deutlich verringerter Kristallisationsneigung zur Verfügung zu stellen. Insbesondere sollten sie geeignet sein zur Herstellung transparenter thermoplastischer Polyurethane.

Die Erfindung betrifft Polyurethane auf Basis
i) wenigstens eines Isocyanates A
ii) wenigstens eines Polyesterdiols B und
iii) gegebenenfalls Kettenverlängerern C und weiteren Hilfsstoffen,
dadurch gekennzeichnet, dass das Polyesterdiol B auf einer Dicarbonsäure mit einer geradzahligen Anzahl von C-Atomen basiert und das dem Polyesterdiol B zugrunde liegende Diol 1,3-Propandiol ist.

Bei der Bestimmung der Zahl der C-Atome werden nur die C-Atome direkt zwischen den Carboxylgruppen der Dicarbonsäure gezählt, die C-Atome in Verzweigungen nicht.

In einer bevorzugten Ausführungsform entspricht die Dicarbonsäure folgender Formel: 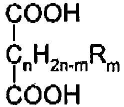 worin bedeuten
n eine gerade Zahl, insbesondere 2, 4, 6, 8, 10, 12, 14, 16
m 0 oder eine ganze Zahl von 1 bis 2n, vorzugsweise 0, 1 oder 2
R Alkyl mit 1 bis 18 C-Atomen.

Die erfindungsgemäßen Polyurethane zeigen überraschenderweise eine Verringerung der Kristallisation und eine verbesserte Transparenz. In einer bevorzugten

Ausführungsform werden verzweigte Diole anteilig, zusammen mit unverzweigten Diolen, eingesetzt, wobei in der Regel mehr als 50 mol-% unverzweigte Diole, bezogen auf die Gesamtheit der Diole, eingesetzt werden.

In einer weiteren bevorzugten Ausführungsform handelt es sich bei dem erfindungsgemäßen Polyurethan um ein thermoplastisches Polyurethan.

In einer weiteren bevorzugten Ausführungsform sind die erhaltenen Polyurethane transparent.

In einer weiteren bevorzugten Ausführungsform ist die Glasübergangstemperatur des erfindungsgemäßen Polyurethans, bestimmt mittels dynamisch-mechanischer Analyse (DMA) kleiner als die eines vergleichbar hergestellten Polyurethans mit entsprechend nächsthöherem geradzahligen Diol und/oder ungeradzahliger Dicarbonsäure im Polyesterdiol B.

In einer bevorzugten Ausführungsform liegt das Molekulargewicht des Polyesterdiols zwischen 500 bis 4000 g/mol, insbesondere bevorzugt zwischen 800 und 2500 g/mol und ganz besonders bevorzugt zwischen 1000 und 2000 g/mol (entsprechend einer OH-Zahl von 28 bis 224, vorzugsweise 112 bis 56 mg KOH/g). In einer weiteren bevorzugten Ausführungsform ist die dem Polyesterdiol B zugrunde liegende Dicarbonsäure Sebazinsäure. In der erfindungsgemäßen Ausführungsform ist das Diol 1,3 Propandiol. In einer besonders bevorzugten Ausführungsform ist das Polyesterdiol B ein Sebazinsäurepropandiolester.

Verfahren zur Herstellung von Polyesterdiolen durch Polykondensation der entsprechenden Diole mit mindestens einer Dicarbonsäure bevorzugt bei erhöhter Temperatur und vermindertem Druck bevorzugt in Gegenwart bekannter Katalysatoren sind allgemein bekannt und vielfältig beschrieben.

Verfahren zur Herstellung der Polyurethane sind ebenfalls allgemein bekannt. Beispielsweise können thermoplastische Polyurethane durch Umsetzung von (a) Isocyanaten mit (b) gegenüber Isocyanaten reaktiven Verbindungen mit einem Molekulargewicht von 500 bis 10000 g/mol und gegebenenfalls (c) Kettenverlängerungsmitteln mit einem Molekulargewicht von 50 bis 499 g/mol gegebenenfalls in Gegenwart von (d) Katalysatoren und/oder (e) üblichen Hilfsstoffen herstellt werden.

Erfindungsgemäß erfolgt die Herstellung von bevorzugt thermoplastischen Polyurethanen durch Umsetzung von Isocyanat A mit Polyesterdiol B und gegebenenfalls weiteren gegenüber Isocyanaten reaktiven Verbindungen und gegebenenfalls Kettenverlänren gegenüber Isocyanaten reaktiven Verbindungen und gegebenenfalls Kettenverlängerungsmitteln C gegebenenfalls in Gegenwart von Katalysatoren D und/oder üblichen Hilfsstoffen E, wobei man besonders bevorzugt Sebazinsäurepropandiol einsetzt.

Die Herstellung des erfindungsgemäßen Polyurethan kann auch über die Zwischenstufe von Präpolymeren erfolgen. Hierbei werden zunächst nur Teilketten des Polymers hergestellt, um so beim Endhersteller eine einfachere Verarbeitung, insbesondere der Isocyanat-Komponente zu gewährleisten. Die so bereit gestellten unvollständig reagierten Ausgangsstoffe werden auch als System bezeichnet, die beispielsweise bei der Herstellung von Schuhsohlen eine große Rolle spielen.

Die bei der Herstellung der Polyurethane üblicherweise verwendeten Komponenten A, B, C sowie gegebenenfalls D und/oder E sollen im Folgenden beispielhaft beschrieben werden:
a) Als organische Isocyanate A können allgemein bekannte aromatische, aliphatische, cycloaliphatische und/oder araliphatische Isocyanate, bevorzugt Diisocyanate eingesetzt werden, beispielsweise 2,2'-, 2,4'- und/oder 4,4'-Diphenylmethandiisocyanat (MDI), 1,5-Naphthylendiisocyanat (NDI), 2,4-und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat, Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1-Isocyanato-4-[(4-isocyanatocyclohexyl) methyl]cyclohexan (H12MDI), 2,6-Diisocyanatohexancarbonsäureester, 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, bevorzugt 2,2'-, 2,4'- und/oder 4,4'-Diphenylmethandiisocyanat (MDI), 1,5-Naphthylendiisocyanat (NDI), 2,4-und/oder 2,6-Toluylendiisocyanat (TDI), Hexamethylendiisocyanat, 1-Isocyanato-4-[(4-isocyanatocyclohexyl) methyl]cyclohexan, und/oder IPDI, insbesondere 4,4'- MDI und/oder Hexamethylendiisocyanat und/oder H12MDI.
b) Als gegenüber Isocyanaten reaktive Verbindungen werden die eingangs dargestellten Polyesterdiole B eingesetzt. Gegebenenfalls können zusätzlich weitere allgemein bekannte gegenüber Isocyanaten reaktive Verbindungen eingesetzt werden, beispielsweise Polyesterdiole, Polyetherole und/oder Polycarbonatdiole, die üblicherweise auch unter dem Begriff "Polyole" zusammengefaßt werden, mit Molekulargewichten von 500 bis 12000 g/mol, bevorzugt 600 bis 6000 g/mol, insbesondere 800 bis 4000 g/mol, und bevorzugt einer mittleren Funktionalität von 1,8 bis 2,3, bevorzugt 1,9 bis 2,2, insbesondere 2. Bevorzugt setzt man ausschließlich die erfindungsgemäßen Polyesterdiole B als Polyole ein.
c) Als Kettenverlängerungsmittel C können allgemein bekannte aliphatische, araliphatische, aromatische und/oder cycloaliphatische Verbindungen mit einem Molekulargewicht von 50 bis 499 g/mol, bevorzugt 2-funktionelle Verbindungen, eingesetzt werden, beispielsweise Alkandiole mit 2 bis 10 C-Atomen im Alkylenrest, bevorzugt Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt unverzweigte Alkandiole, insbesondere Propan-1,3-diol und Butan-1,4-diol.
d) Geeignete Katalysatoren D, welche insbesondere die Reaktion zwischen den NCO-Gruppen der Diisocyanate A und der Komponente B beschleunigen, sind die nach dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,00001 bis 0,1 Gew.-Teilen pro 100 Gew.-Teile Polyhydroxylverbindung (b) eingesetzt.
e) Neben Katalysatoren D können den Aufbaukomponenten A bis C auch übliche Hilfsmittel E hinzugefügt werden. Genannt seien beispielsweise Treibmittel, oberflächenaktive Substanzen, Flammschutzmittel, Keimbildungsmittel, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel, Weichmacher und Metalldeaktivatoren. Als Hydrolyseschutzmittel werden bevorzugt oligomere und/oder polymere aliphatische oder aromatische Carbodiimide verwendet. Um die erfindungsgemäßen Polyurethan gegen Alterung zu stabilisieren, werden dem Polyurethan bevorzugt Stabilisatoren zugegeben. Stabilisatoren im Sinne der vorliegenden Erfindung sind Additive, die einen Kunststoff oder eine Kunststoffmischung gegen schädliche Umwelteinflüsse schützen. Beispiele sind primäre und sekundäre Antioxidantien, Thiosynergisten, Organophosphorverbindungen des trivalenten Phosphors, Hindered Amine Light Stabilizer, UV-Absorber, Hydrolyseschutzmittel, Quencher und Flammschutzmittel. Beispiele für kommerzielle Stabilisatoren sind gegeben in Plastics Additive Handbook, 5th Edition, H. Zweifel, ed., Hanser Publishers, München, 2001 ([1]), S.98-S136. Ist das erfindungsgemäße Polyurethan während seiner Anwendung thermoxidativer Schädigung ausgesetzt, können Antioxidantien zugegeben werden. Bevorzugt werden phenolische Antioxidantien verwendet. Beispiele für phenolische Antioxidantien sind gegeben in Plastics Additive Handbook, 5th edition, H. Zweifel, ed, Hanser Publishers, München, 2001, S.98-107 und S 116-S. 121. Bevorzugt sind solche phenolische Antioxidantien, deren Molekulargewicht größer als 700 g/mol sind. Ein Beispiel für ein bevorzugt verwendetes phenolisches Antioxidans ist Pentaerythrityl-tetrakis (3-(3,5-bis(1,1-dimethylethyl)-4-hydroxyphenyl)propionate) (Irganox^{®} 1010) oder andere hoch-molekularere Kondensationsprodukte aus entsprechenden Antioxidantien. Die phenolischen Antioxidantien werden im allgemeinen in Konzentrationen zwischen 0,1 und 5 Gew.-% eingesetzt, bevorzugt zwischen 0,1 und 2 Gew.-%, insbesondere zwischen 0,5 und 1,5 Gew.-%, jeweils bezogen auf das Gesamtgewicht des Polyurethans. Weiterhin werden bevorzugt Antioxidantien verwendet, die amorph oder flüssig sind. Auch wenn die erfindungsgemäße Polyurethane aufgrund ihrer bevorzugten Zusammensetzung deutlich stabiler gegen ultravioletter Strahlung sind als z. B. mit Phthalaten oder Benzoaten weichgemachte Polyurethane, so ist eine Stabilisierung enthaltend nur phenolische Stabilisatoren oft nicht ausreichend. Aus diesem Grund werden die erfindungsgemäßen Polyurethane, die UV-Licht ausgesetzt werden, bevorzugt zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z. B. zur Gruppe der Zimtsäureester, der Diphenylcyanacrylate, der Oxalsäureamide (Oxanilide), insbesondere 2-Ethoxy-2'-ethyloxanilid, der Formamidine, der Benzylidenemalonate, der Diarylbutadiene, Triazine sowie der Benzotriazole. Beispiele für kommerzielle UV-Absorber finden sich in Plastics Additive Handbook, 5th edition, H. Zweifel, ed, Hanser Publishers, München, 2001. Seite 116-122. In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV-Absorber ein Molekulargewicht von nicht größer als 5000 g/mol, besonders bevorzugt von nicht größer als 2000 g/mol aufweisen. Besonders geeignet als UV-Absorber ist die Gruppe der Benzotriazole. Beispiele für besonders geeignete Benzotriazole sind Tinuvin^{®} 213, Tinuvin^{®} 328, Tinuvin^{®} 571, sowie Tinuvin^{®} 384 und das Eversorb®82. Bevorzugt werden die UV-Absorber in Mengen zwischen 0,01 und 5 Gew.-%, bezogen auf die Gesamtmasse Polyurethan zudosiert, besonders bevorzugt zwischen 0,1 und 2,0 Gew.-%, insbesondere zwischen 0,2 und 0,5 Gew.-%, jeweils bezogen auf das Gesamtgewicht des Polyurethans. Oft ist eine oben beschriebene UV-Stabilisierung basierend auf einem Antioxidans und einem UV-Absorber noch nicht ausreichend, um eine gute Stabilität des erfindungsgemäßen Polyurethan gegen den schädlichen Einfluss von UV-Strahlen zu gewährleisten. In diesem Falle kann zu der Komponente E bevorzugt zusätzlich zu dem Antioxidans und dem UV-Absorber, noch ein Hindered-Amine Light Stabilizer (HALS) zugegeben werden. Eine besonders bevorzugte UV-Stabilisierung enthält eine Mischung aus einem phenolischen Stabilisator, einem Benzotriazol und einer HALS-Verbindung in den oben beschriebenen bevorzugten Mengen. Es können aber auch Verbindungen eingesetzt werden, die die funktionellen Gruppen der Stabilisatoren vereinigen wie zum Beispiel sterische gehinderte Piperidylhydroxybenzyl-Kondensationsprodukte wie zum Beispiel Di-(1,2,2,6,6-pentamethyl-4-piperidyl)-2-butyl-2-(3,5-di-tert-butyl-4-hydroxybenzyl)malonate, Tinuvin^{®} 144.
   Besonders geeignet sind auch Wachse, die sowohl bei der technischen Herstellung der Polyurethane als auch bei ihrer Verarbeitung wichtige Aufgaben übernehmen. Das Wachs dient als friktionsminderndes inneres und äußeres Gleitmittel und verbessert so die Fliesseigenschaften des Polyurethans. Zusätzlich soll es als Trennmittel das Ankleben des Polyurethans an das umgebende Material (z. B. das Werkzeug) verhindern, und als Dispergator für andere Zusatzstoffe, z. B. Pigmente und Antiblockmittel, wirken. Geeignet sind z. B. Fettsäureester, wie Stearinsäureester und Montansäureester und deren Metallseifen, daneben Fettsäureamide, wie Stearylamide und Ölsäureamide, oder auch Polyethylenwachse. Eine Übersicht der in Thermoplasten eingesetzten Wachse findet sich in H. Zweifel (Ed.): Plastics Additives Handbook, 5. Ausgabe, Hanser Verlag, München 2001, S. 443 ff., EP-A 308 683, EP-A 670 339 und JP-A 5 163 431.
   Verbesserungen können auch durch den Einsatz von Ester- und Amidkombinationen gemäß DE-A 19 607 870 und durch den Einsatz von speziellen Wachs-Mischungen von Montansäure- und Fettsäurederivaten (DE-A 19 649 290) erzielt werden, weiterhin durch die Verwendung von Hydroxy-Stearylsäureamide gemäß DE 102006009096 A1.
   In einer besonders bevorzugten Ausführungsform werden Fettsäuren gemäß DE-A-19706452 mit 24 bis 34 Kohlenstoffatomen und/oder Ester und/oder Amide dieser Fettsäuren bei Polyurethanen mit gewünschter verminderter Tendenz zur Aufnahme und/oder Abgabe von Substanzen eingesetzt, wobei die Fettsäuren und/oder deren Derivate in einen Gewichtsanteil von 0,001 bis 15 Gew.-%, bezogen auf das Gesamtgewicht der Polyisocyanat-Polyadditionsprodukte, eingesetzt werden.
   In einer weiteren bevorzugten Ausführungsform wird eine Mischung gemäß EP-A-1826225 aus den Umsetzungsprodukten von Alkylendiaminen mit a) einer oder mehreren linearen Fettsäuren und von Alkylendiaminen mit b) 12-Hydroxystearinsäure und/oder aus den Umsetzungsprodukten von Alkylendiaminen mit c) 12-Hydroxystearinsäure und einer oder mehreren linearen Fettsäuren eingesetzt. Diese Mischung enthält also die Umsetzungsprodukte von Alkylendiamin mit a) und b) und/oder c).

Nähere Angaben über die oben genannten Hilfsmittel- und Zusatzstoffe sind der Fachliteratur zu entnehmen, z. B. aus Plastics Additive Handbook, 5th edition, H. Zweifel, ed, Hanser Publishers, München, 2001. Alle in dieser Schrift genannten Molekulargewichte weisen die Einheit [g/mol] auf.

In einer weiteren bevorzugten Ausführungsform sind die Dicarbonsäure und/oder das Diol des Polyesterdiols B und/oder der Kettenverlängerer C nicht-fossilen Ursprungs.

Die Herstellung der Polyurethane kann nach den bekannten Verfahren diskontinuierlich oder kontinuierlich, beispielsweise mit Reaktionsextrudern oder dem Bandverfahren nach one-shot oder dem Prepolymerverfahren, bevorzugt nach dem one-shot-Verfahren erfolgen. Bei diesen Verfahren können die zur Reaktion kommenden Komponenten A, B und gegebenenfalls C, D und/oder E nacheinander oder gleichzeitig miteinander vermischt werden, wobei die Reaktion unmittelbar einsetzt. Beim Extruderverfahren werden die Aufbaukomponenten A, B sowie gegebenenfalls C, D und/oder E einzeln oder als Gemisch in den Extruder eingeführt, z. B. bei Temperaturen von 100 bis 280°C, vorzugsweise 140 bis 250°C zur Reaktion gebracht, das erhaltene Polyurethan wird extrudiert, abgekühlt und granuliert.

Die Verarbeitung der erfindungsgemäßen Polyurethane, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z. B. Spritzguss, Kalendrieren oder Extrusion. Die nach den erfindungsgemäßen Verfahren herstellbaren thermoplastischen Polyurethane, bevorzugt Beschichtungen, Kabel, Fußböden für Gebäude und Transport, Steckverbindungen, Solarmodule, Folien, Formteile, Schuhsohlen und Schuhteile, Rollen, Fasern, Verkleidungen in Automobilen, Profile, Laminate
und Wischerblätter, Schläuche, Kabelstecker, Faltenbälge, Schleppkabel, Kabelummantelungen, Dichtungen, Non Woven-Gewebe, Riemen oder Dämpfungselemente weisen die eingangs dargestellten Vorteile auf.

### Beispiele

### Beispiel 1

Es wurden die aus Tabelle 1 ersichtlichen Dicarbonsäuren und Diole in einem Molverhältnis von Dicarbonsäure zu Diol von ca. 1 zu 1 im Vakuum umgesetzt. Anschließend wurde dieses Polyesterdiol unter Rühren mit dem Kettenverlängerer Butandiol versetzt. Nach anschließender Erwärmung der Lösung auf 80 °C wurden Methylendiphenyldiisocyanat (MDI) zugegeben und so lange gerührt, bis die Lösung homogen war.

Die Kristallisationstemperaturen des erhaltenen Polyurethans wurden wie folgt bestimmt:
Die Glasübergangstemperatur Tg der Weichphase wurde mittels dynamisch mechanischer Analyse (DMA) bestimmt. Dabei entspricht das Maximum aus tan δ der Glasübergangstemperatur Tg. Die DMA-Messung wurde an einem Gerät der Fa. Rheometric Scientific (ARES) durchgeführt werden. Die Messung erfolgten gemäß DIN EN ISO 6721.

Es wurden die aus folgender Tabelle 1 ersichtlichen Werte erhalten:

**Tabelle 1: Einfluss der Diolkettenlänge**

| Nr | Name Säure | Name Diol | Molekulargewicht [g/mol] | Tg (°C) |
|---|---|---|---|---|
| 1 | Sebazinsäure | Ethandiol | 1000 | 9,2 |
| 2 | Sebazinsäure | Propandiol | 1000 | -6,0 |
| 3 | Sebazinsäure | Butandiol | 1000 | 9,9 |
| 4 | Sebazinsäure | Pentandiol | 1000 | 9,5 |
| 5 | Sebazinsäure | Hexandiol | 1000 | 14,5 |

**Tabelle 2 : Molekulargewicht Polyol 1000, Härte TPU Shore 95A (Vergleich Butandiol mit Propandiol)**

| Nr | Name Säure | Name Diol | Molekulargewicht [g/mol] | Tg (°C) |
|---|---|---|---|---|
| 6 | Korksäure | Propandiol | 1000 | 3,7 |
| 7 | Korksäure | Butandiol | 1000 | 4,1 |
| 8 | Dodecandisäure | Propandiol | 1000 | 8,1 |
| 9 | Dodecandisäure | Butandiol | 1000 | 14,4 |

**Tabelle 3: Molekulargewicht 2000, Härte TPU Shore 96A (Vergleich Butandiol mit Propandiol)**

| Nr | Name Säure | Name Diol | Molekulargewicht [g/mol] | Tg (°C) |
|---|---|---|---|---|
| 10 | Sebazinsäure | Propandiol | 2000 | -26,6 |
| 11 | Sebazinsäure | Butandiol | 2000 | -6,1 |

Hieraus ergibt sich:
- Vergleicht man Beispiele 1-5 in Tabelle 1, ist klar zu erkennen, dass mit zunehmender Diollänge die Glasübergangstemperatur zunimmt. Dieser Effekt wird allgemein als Weichphasenkristallsation beschrieben. Überraschender Weise zeigt das erfindungsgemäße Beispiel 2 eine deutlich niedrigere Neigung zur Weichphasenkristallisation. Mit zunehmender Weichphasenkristallisation wird das Material opaker und zeigt schlechtere Kälteschlagzähigkeit.
• Vergleicht man jeweils die Beispiele 2, 6 und 8 (Propandiol im Polyesterdiol B) mit den Beispielen 3, 7 und 9 (Butandiol im Polyesterdiol B), ist klar zu erkennen, dass die erfindungsgemäßen Polyesterdiole mit Propandiol unter sonst gleichen Bedingungen mit Polyesterdiolen auf Basis Butandiol in der Kristallisation überlegen sind, so dass Prüfplatten mit höheren Molekulargewichten des Polyesterdiols B transparent sind, während diejenigen aus Butandiol opak sind.
• Mit zunehmendem Polyol-Molekulargewicht erwartet der Fachmann auch eine Zunahme dieses Effekts. Dazu wurden zur Tabelle 1 die Beispiele 10 und 11 in Tabelle 3 hergestellt. Überraschenderweise ist beim erfindungsgemäßen Beispiel 10 die Tendenz zur Weichphasenkristallisation noch weniger ausgeprägt als im Beispiel 2. Die geringere Weichphasenkristallisation zeigt sich auch in der Transparenz der Prüfplatten aus Beispiel 10, während die Prüfplatten aus 11 opak sind.

## Patentansprüche

1. Polyurethan auf Basis
i) wenigstens eines Isocyanates A
ii) wenigstens eines Polyesterdiols B und
iii) gegebenenfalls Kettenverlängerern C und weiteren Hilfsstoffen,
**dadurch gekennzeichnet, dass** das Polyesterdiol B auf einer Dicarbonsäure mit einer geradzahligen Anzahl von C-Atomen basiert und das dem Polyesterdiol B zugrunde liegende Diol 1,3-Propandiol ist.

2. Polyurethan gemäß Anspruch 1, **dadurch gekennzeichnet, dass** die dem Polyesterdiol B zugrunde liegende Dicarbonsäure folgender Formel entspricht 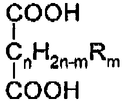 worin bedeuten
n eine gerade Zahl, insbesondere 2, 4, 6, 8, 10, 12, 14, 16
m 0 oder eine ganze Zahl von 1 bis 2n, vorzugsweise 0, 1 oder 2
R Alkyl mit 1 bis 18 C-Atomen

3. Polyurethan gemäß wenigstens einem der vorhergehenden Ansprüche, **dadurch gekennzeichnet, dass** es ein thermoplastisches Polyurethan ist.

4. Polyurethan gemäß wenigstens einem der vorhergehenden Ansprüche, **dadurch gekennzeichnet, dass** das Isocyanat A ausgewählt ist aus der Gruppe 2,2'-, 2,4'-und/oder 4,4'-Diphenylmethandiisocyanat (MDI), 2,4- und/oder 2,6-Toluylendiisocyanat (TDI), Hexamethylendiisocyanat, 1-Isocyanato-4-[(4-isocyanatocyclohexyl) methyl]cyclohexan (H12MDI).

5. Polyurethan gemäß wenigstens einem der vorhergehenden Ansprüche, **dadurch gekennzeichnet, dass** die dem Polyesterdiol B zugrunde liegende Dicarbonsäure Sebazinsäure ist.

6. Polyurethan gemäß wenigstens einem der vorhergehenden Ansprüche, **dadurch gekennzeichnet, dass** das Polyesterdiol B ein Sebazinsäurepropandiolester ist.

7. Polyurethan gemäß wenigstens einem der vorhergehenden Ansprüche, **dadurch gekennzeichnet, dass** das Molekulargewicht des Polyesterdiols B zwischen 500 und 4000 g/mol liegt.

8. Polyurethan gemäß wenigstens einem der vorhergehenden Ansprüche, **dadurch gekennzeichnet, dass** das Polyesterdiol B ein Sebazinsäurepropandiolester mit einer OH-Zahl von 28 bis 224, vorzugsweise 56 bis 112 ist.

9. Polyurethan gemäß wenigstens einem der vorhergehenden Ansprüche, **dadurch gekennzeichnet, dass** die Dicarbonsäure und/oder das Diol des Polyesterdiols B und/oder der Kettenverlängerer C nicht fossilen Ursprungs sind.

10. Polyurethan gemäß wenigstens einem der vorhergehenden Ansprüche, **dadurch gekennzeichnet, dass** das erhaltende Polyurethan transparent ist.

11. Polyurethan gemäß wenigstens einem der vorhergehenden Ansprüche und **dadurch gekennzeichnet, dass** die Glasübergangstemperatur des so hergestellten TPU gemessen als tan δ kleiner ist, als die eines vergleichbar hergestellten TPU mit entsprechend nächsthöheren geraden Diol bzw. ungeraden Dicarbonsäuren im Polyesterdiol B.

12. Polyurethan gemäß wenigstens einem der vorhergehenden Ansprüche, **dadurch gekennzeichnet, dass** enthaltend ist
wenigstens eine Fettsäure mit 24 bis 34 Kohlenstoffatomen und/oder Ester und/oder Amide dieser Fettsäure oder
eine Mischung aus den Umsetzungsprodukten von Alkylendiaminen mit a) einer oder mehreren linearen Fettsäuren und von Alkylendiaminen mit b) 12-Hydroxystearinsäure und/oder aus den Umsetzungsprodukten von Alkylendiaminen mit c) 12-Hydroxystearinsäure und einer oder mehreren linearen Fettsäuren.

13. Verwendung eines Polyurethans gemäß wenigstens einem der vorhergehenden Ansprüche zur Herstellung von Formkörpern, Extrusionsartikeln und Non-woven Artikeln.

## Claims

1. A polyurethane based on
i) at least one isocyanate A,
ii)at least one polyester diol B, and
iii) optionally chain extenders C and further assistants,
wherein said polyester diol B is based on a dicarboxylic acid having an even number of carbon atoms and the diol underlying said polyester diol B is 1,3-propanediol.

2. The polyurethane according to claim 1 wherein the dicarboxylic acid underlying said polyester diol B conforms to the following formula: 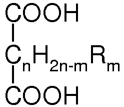 where
n is an even number, more particularly 2, 4, 6, 8, 10, 12, 14, 16,
m is 0 or an integer from 1 to 2n, preferably 0, 1 or 2, and
R is alkyl of 1 to 18 carbon atoms.

3. The polyurethane according to at least one of the preceding claims which is a thermoplastic polyurethane.

4. The polyurethane according to at least one of the preceding claims wherein said isocyanate A is selected from the group consisting of 2,2'-, 2,4'- and/or 4,4'-diphenylmethane diisocyanate (MDI), 2,4- and/or 2,6-tolylene diisocyanate (TDI), hexamethylene diisocyanate, 1-isocyanato-4-[(4-isocyanatocyclohexyl)methyl]cyclohexane (H12MDI).

5. The polyurethane according to at least one of the preceding claims wherein the dicarboxylic acid underlying said polyester diol B is sebacic acid.

6. The polyurethane according to at least one of the preceding claims wherein said polyester diol B is a propanediol sebacate.

7. The polyurethane according to at least one of the preceding claims wherein the molecular weight of said polyester diol B is between 500 and 4000 g/mol.

8. The polyurethane according to at least one of the preceding claims wherein said polyester diol B is a propanediol sebacate having an OH number of 28 to 224 and preferably 56 to 112.

9. The polyurethane according to at least one of the preceding claims wherein the dicarboxylic acid and/or the diol of said polyester diol B and/or said chain extender C are of nonfossil origin.

10. The polyurethane according to at least one of the preceding claims wherein the polyurethane obtained is transparent.

11. The polyurethane according to at least one of the preceding claims wherein the glass transition temperature of the TPU thus obtained, measured as tan δ, is smaller than that of a comparably obtained TPU having whichever is the next higher even diol and/or odd dicarboxylic acids in said polyester diol B.

12. The polyurethane according to at least one of the preceding claims comprising
at least one fatty acid of 24 to 34 carbon atoms and/or esters and/or amides of this fatty acid, or
a mixture of the reaction products of alkylenediamines with a) one or more linear fatty acids and of alkylenediamines with b) 12-hydroxystearic acid and/or of the reaction products of alkylenediamines with c) 12-hydroxystearic acid and one or more linear fatty acids.

13. The use of a polyurethane according to at least one of the preceding claims in the manufacture of molded articles, extruded articles and non-woven articles.

## Revendications

1. Polyuréthane à base de
i) au moins un isocyanate A,
ii) au moins un polyester diol B et
iii) éventuellement des allongeurs de chaîne C et d'autres adjuvants,
**caractérisé en ce que** le polyester diol B est à base d'un acide dicarboxylique ayant un nombre pair d'atomes C et le diol à la base du polyester diol B est le 1,3-propanediol.

2. Polyuréthane selon la revendication 1, **caractérisé en ce que** l'acide dicarboxylique à la base du polyester diol B correspond à la formule suivante : 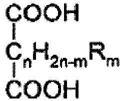 dans laquelle
n signifie un nombre pair, notamment 2, 4, 6, 8, 10, 12, 14, 16,
m signifie 0 ou un nombre entier de 1 à 2n, de préférence 0, 1 ou 2,
R signifie alkyle de 1 à 18 atomes C.

3. Polyuréthane selon au moins l'une quelconque des revendications précédentes, **caractérisé en ce qu'**il s'agit d'un polyuréthane thermoplastique.

4. Polyuréthane selon au moins l'une quelconque des revendications précédentes, **caractérisé en ce que** l'isocyanate A est choisi dans le groupe constitué par le diisocyanate de 2,2'-, 2,4'- et/ou 4,4'-diphénylméthane (MDI), le diisocyanate de 2,4- et/ou 2,6-toluylène (TDI), le diisocyanate d'hexaméthylène, le 1-isocyanato-4-[(4-isocyanatocyclohexyl)méthyl]cyclohexane (H12MDI).

5. Polyuréthane selon au moins l'une quelconque des revendications précédentes, **caractérisé en ce que** l'acide dicarboxylique à la base du polyester diol B est l'acide sébacique.

6. Polyuréthane selon au moins l'une quelconque des revendications précédentes, **caractérisé en ce que** le polyester diol B est un ester de propane diol de l'acide sébacique.

7. Polyuréthane selon au moins l'une quelconque des revendications précédentes, **caractérisé en ce que** le poids moléculaire du polyester diol B est compris entre 500 et 4 000 g/mol.

8. Polyuréthane selon au moins l'une quelconque des revendications précédentes, **caractérisé en ce que** le polyester diol B est un ester de propane diol de l'acide sébacique ayant un indice OH de 28 à 224, de préférence de 56 à 112.

9. Polyuréthane selon au moins l'une quelconque des revendications précédentes, **caractérisé en ce que** l'acide dicarboxylique et/ou le diol du polyester diol B et/ou l'allongeur de chaîne C ne sont pas d'origine fossile.

10. Polyuréthane selon au moins l'une quelconque des revendications précédentes, **caractérisé en ce que** le polyuréthane obtenu est transparent.

11. Polyuréthane selon au moins l'une quelconque des revendications précédentes, **caractérisé en ce que** la température de transition vitreuse du TPU ainsi fabriqué mesurée en tant que tan δ est inférieure à celle d'un TPU fabriqué de manière analogue avec un diol pair ou un acide dicarboxylique impair supérieur correspondant dans le polyester diol B.

12. Polyuréthane selon au moins l'une quelconque des revendications précédentes, **caractérisé en ce qu'**il contient
au moins un acide gras de 24 à 34 atomes de carbone et/ou des esters et/ou des amides de cet acide gras, ou
un mélange des produits de réaction d'alkylène diamines avec a) un ou plusieurs acides gras linéaires et d'alkylène diamines avec b) de l'acide 12-hydroxystéarique et/ou des produits de réaction d'alkylène diamines avec c) de l'acide 12-hydroxystéarique et un ou plusieurs acides gras linéaires.

13. Utilisation d'un polyuréthane selon au moins l'une quelconque des revendications précédentes pour la fabrication de corps moulés, d'articles extrudés et d'articles non tissés.
